# EUROPEAN PATENT APPLICATION

(11) **EP 2 808 932 A1**
(43) Date of publication of application: **03.12.2014**
(21) Application number: 13170073.4
(22) Date of filing: 31.05.2013
(51) Int. Cl.: H01M 8/12, H01M 4/86, H01M 4/90, H01M 8/02, H01M 4/88

(54) **Metal-supported solid oxide cell**

(71) Applicant: Topsøe Fuel Cell A/S, 2800 Kgs. Lyngby (DK)
(72) Inventor: McKenna, Brandon John, 2900 Hellerup (DK); Küngas, Rainer, 2300 Copenhagen (DK); Holt Nørby, Tobias, 2600 Glostrup (DK); Blennow Tullmar, Bengt Peter Gustav, 2800 Kgs.Lyngby (DK)
(74) Representative: Haldor Topsøe A/S

(57) **Abstract**

A novel solid oxide cell consists of at least one layer containing steel (metal alloys consisting predominantly of Fe) [layer A "support"], in which the backbone of one or more layers [layer B ("anode" or "cathode")], that is located between layer A and a substantially dense ion-conducting layer [layer C "electrolyte"], is a cermet comprising a ceramic material with a metal alloy, in which the main metal component is neither nickel nor steel. The cell may comprise a further layer (layer D), which is a cathode layer, when layer B is an anode layer, and vice versa. This complete cell can be a solid oxide fuel cell (SOFC) as well as a solid oxide electrolysis cell (SOEC) depending on which of the electrodes serves as the anode.

## Description

The present invention relates to a novel fuel electrode backbone for a metal-supported solid oxide cell. More specifically, the invention concerns a solid oxide cell, which consists of at least one first layer containing steel, and wherein the backbone of one or more layers, that is located between said first layer and a substantially dense ion-conducting layer, is a cermet of a ceramic material and a metal or an alloy, in which the main metal component is neither nickel nor steel. Preferably said metal component is cobalt.

The traditional solid oxide cell concept employs ceramic or cermet materials as the thickest layer or structural element. Metal-supported solid oxide cells utilize a predominantly metal structure for the primary purpose of imparting more favourable mechanical properties, e.g. ductility, creep behaviour, and strength to the cell. Metal-supported solid oxide cells can be produced by first sintering half-cells and then applying the additional electrode layer afterwards, or by sintering both electrode backbones during the same step.

A main limitation to obtaining operational success with metal-supported cells is the material composition of the active anode (here, referring to "anode" during fuel cell operation, which shall be the "cathode" in electrolysis operation). Under fuel cell operating conditions, water is produced on the anode side, and this water promotes corrosion. Under electrolysis operating conditions, this same layer is exposed to flow of water (or other oxidizing chemicals) which causes the same problems. While the metal support of the cell (which has an approximate thickness of 300 µm and contains metal particles larger than 10 µm) oxidizes too slowly to cause problems, the backbone of the thin anode layer (which has an approximate thickness of 15 µm and contains metal particles smaller than 4 µm) oxidizes much more quickly due to its large surface area, even though it has the same material composition as the support. The expansion of this anode causes both stresses and cracking in the adjacent electrolyte, which may lead to a catastrophic cell failure. This phenomenon can severely limit the lifetime of metal-supported solid oxide cells. For this reason the anode material has to be replaced with a different material in order to obtain a cell which is able to operate at high fuel utilizations for extended durations.

It has been attempted to make metal-supported solid oxide cells using a copper backbone, but due to the fact that copper melts at the sintering temperatures employed, a fine porosity cannot be obtained. Therefore, pure copper cannot be used as backbone material, while certain copper alloys with higher melting points may be usable. Besides, a number of conductive oxides have been researched for possible use as backbones. For instance, various titanate materials such as STN (i.e. Nb-doped SrTiO₃) and also chromites have been investigated. Furthermore, different stainless steel compositions have been considered, however with limited success.

Cobalt-containing anodes have been studied for standard cermet-supported cells in a few instances, but not for reasons which address the specific challenges faced during the production of steel-based cells. Further it should be noted that cobalt has been considered for use in other parts of solid oxide cells, primarily in ionic rather than metallic form. For instance, cobalt is used as a dopant material in cathodes, and use of cobalt has also been considered for interconnect protective coatings in the form of a spinel. However, these uses are quite different from the application of cobalt as an anode backbone.

US 2009/0061272 discloses metal-supported composite anodes, which may contain cobalt. More specifically, these anodes are cermet anode structures containing an electronic conductive phase of a Fe-Cr alloy, e.g. stainless steel, and a ceria-based oxide phase finely dispersed within said conductive phase. WO 2005/057685 relates to solid oxide fuel cells, which comprise an internal fuel electrode (anode) serving as a support, an intermediate cermet electrolyte and an external air electrode (cathode). However, this prior art document does not employ stainless steel supports and therefore does not address problems related thereto. US 2010/0047565 describes NiO-YSZ anodes (where YSZ is yttrium-stabilized zirconia), which are used in metal-supported cells, and the document relates to a process for producing or depositing an electrically conductive layer with perovskite structure, which may contain cobalt. However, this cobalt is a chemical ion of the perovskite rather than metallic cobalt. In US 2012/0244456 a substrate-supported anode for a high-temperature fuel cell is described, said anode comprising a three-layer anode laminate disposed on a metallic substrate. Each layer of the laminate comprises YSZ and Ni, and the metallic substrate can be a Cr-based alloy with at least 65 wt% Cr or a ferritic FeCrCo alloy with 20-30 wt% Cr. This means that, unlike the idea underlying the present invention, Co is necessarily alloyed with Fe, and furthermore Co is not used in the active layer, but only in the supporting layer. Finally US 2012/0231366 describes a fuel cell anode comprising a porous ceramic molten metal composite wherein a metal or metal alloy is infused into a porous ceramic material. The metal or metal alloy can i.a. comprise cobalt. However, since Co is applied as an infusion into a ceramic backbone rather than constituting the backbone, and since the metallic alloy should be molten during operation rather than being solid, this prior art document does not anticipate the present invention.

Metal-supported solid oxide cells typically comprise a porous metal support, a fuel electrode, an electrolyte and an air electrode. Each of the above layers can subsequently consist of one or more layers (with different porosity, particle size or chemical composition).

The present invention is based on the idea of employing a fuel electrode backbone composed of certain alloys which will not corrode significantly during normal operation of the solid oxide cell. Importantly, this criterion excludes stainless steel alloys from being used in the fuel electrode of the present invention. As already mentioned, the most preferred metal is cobalt. Another preferred metal is copper.

More specifically, the invention relates to a solid oxide cell consisting of at least one layer containing steel (metal alloys consisting predominantly of Fe) [layer A "support"], in which the backbone of one or more layers [layer B ("anode" or "cathode")], that is located between layer A and a substantially dense ion-conducting layer [layer C "electrolyte"], is a cermet comprising a ceramic material with a metal alloy, in which the main metal component is neither nickel nor steel. Of particular interest are pure cobalt as well as alloys consisting of two or more metals selected from Co, Cu, Cr, Fe, Mo and Zr.

The layer B is preferably a series of layers (B1, B2,...) in which the layers are graded by at least one of their properties such as pore size, particle size, porosity, and material composition.

The complete cell contains two electrode layers (an "anode" and a "cathode") in order to be electrochemically operational. Thus, it comprises a further layer (layer D), which is a cathode layer, when layer B is an anode layer, and vice versa. This complete cell can be a solid oxide fuel cell (SOFC) as well as a solid oxide electrolysis cell (SOEC) depending on which of the electrodes serves as the anode.

In the following, the invention is described in more detail referring to the drawings, where:
Fig. 1 is a schematic view of the solid oxide cell of the invention, consisting of a metal support ("layer A"), a first electrode consisting of one or more layers ("layer B" or "anode" or "cathode")) and a substantially dense ion-conducting layer ("layer C" or "electrolyte"). The figure also shows the second electrode ("layer D"), which is needed to make up a complete cell.
Fig. 2 is a Scanning Electron Microscopy (SEM) image of the metal-supported solid oxide cell without an air electrode.

Alloys of Co are preferred because of their higher melting points. Pure non-alloyed cobalt is particularly interesting for simplicity, but also because it is easily reduced in comparison to additive metals. Conventional ceramic/cermet cells use anodes containing Ni/YSZ, and a preferred fuel electrode backbone of a metal-supported solid oxide cell will, by analogy, contain Co/ScSZ (where ScSZ is scandia-stabilized zirconia). Exactly the same fabrication methods (i.e. either tape casting or spraying) can be used. The cobalt has the necessary properties described above, and the ScSZ increases the mechanical and chemical compatibility with the electrolyte, which is also made of ScSZ. The exact material ratios can be altered in order to optimize the sintering behaviour during cell production. As usual for metal-supported solid oxide cells, the anode is then infiltrated with catalysts such as doped ceria and Ni.

The metal of layer B preferably comprises weight percents of metals in the ranges of: 50-99% Co, 0-20% Cr, 0-15% Mo, 0-49% Fe, and less than 1% each of Ni, Mn, Si, and C.

In a preferred embodiment, the metal in layer B is an alloy comprising weight percents of component metals in the ranges of: 50-70% Co, 15-40% Cr, 1-15% Mo, and less than 1% each of Ni, Mn, Fe, Si, and C.

When the metal of layer B predominantly is copper, it is preferred that it also contains at least 10% Co and optionally minor amounts of Cr, Mo, Zr or Be, or a combination thereof. In another preferred embodiment the metal of layer B consists predominantly of Co containing minor amounts of Cr or Mo. In still another preferred embodiment, the metal of layer B consists predominantly of Co containing minor amounts of Mo and maximum 50% of Fe or Cr which have diffused into the Co during fabrication. In yet another preferred embodiment the metal of layer B consists predominantly of Cr.

The ceramic material is preferably a zirconia with high content in the cubic phase as stabilized by Sc, Y or Al, or a combination thereof. In another preferred embodiment the ceramic material is an oxygen conductor (such as Y-stabilized zirconia, Sc-stabilized zirconia, doped lanthanum gallates (such as LSGM) or doped ceria) or a proton-conductor (doped barium cerates (e.g. BCY) or barium zirconates (e.g. BCZ)) or a mixture of any of these.

The metal of Layer B may contain minor amounts of sintering inhibitor oxides, and these oxides may be located partially within the metal or at the metal surface as dense or non-dense layers. For instance, the particles of Layer B can be coated on the surface with an oxide that counteracts sintering or chemical diffusion.

In the cell according to the present invention, the metal of layer B preferably has a porosity between 20% and 80%. Furthermore, the metal of layer B preferably has a particle size between 0.5 µm and 20 µm. The thickness of layer B is preferably between 5 µm and 100 µm.

The mass ratio of ceramic material to metallic material in Layer B is preferably below 80%, and it can be as low as close to 0%.

In the cell according to the present invention, the layer B backbone materials are preferably coated with electrochemically active materials for the fuel cell operation. These active materials may advantageously comprise Ni and doped ceria.

Furthermore, the layer B backbone or any active materials thereupon are preferably coated with corrosion-inhibiting materials. The backbone or active materials thereupon may also advantageously be coated with chemicals which promote chemical tolerance to operation in sulfur-containing fuels.

Importantly, layer B or any active materials thereupon may be used as an electrode in other electrochemical applications, such as (but not limited to) solid oxide electrolysis cells, electrochemical flue gas cleaning devices, oxygen separation membranes, and hydrogen separation membranes.

Electrochemical cells according to the invention, consisting of layers A, B and C, can be combined with additional layers (such as air electrode and current collecting layers), i.e. layer D, to form a fully operational solid oxide fuel cell or a solid oxide electrolysis cell.

The present invention does not only concern single cells that incorporate layers A, B and C, but also a stack of cells, wherein the individual cells are electrically connected in series configuration.

Compared to the previously used anode backbones, the cobalt (or cobalt alloy) cermet anode backbone in the cells according to the present invention offers a number of advantages:

First of all, the novel anode backbone according to the invention does not oxidize under ordinary operation conditions with the various fuels used for solid oxide fuel cells or solid oxide electrolysis cells, thus preserving the integrity (density) of the electrolyte. It also does not appreciably undergo composition changes during binder burnout if pure cobalt(II)oxide or pure copper oxide is used. Furthermore, the anode backbone according to the invention contains materials that are easily reduced (compared to Cr₂O₃ which occurs in steel), especially if pure cobalt(II)oxide or pure copper oxide is used. However, as already mentioned, oxides that are difficult to reduce, such as Cr₂O₃ or spinels, may be present as sintering inhibitors, but these should only be present to the extent that they inhibit undesirable agglomeration leading to significant losses of porosity and surface area, and not to the extent that they undesirably inhibit fusion between particles during synthesis.

In addition, the novel anode backbone according to the invention does not melt like pure copper (or silver or lead) during sintering, if cobalt alloys or appropriately tailored copper alloys are used. Furthermore, because it is metallic, it is more electrically conductive in comparison to electrically conducting ceramic materials being considered for the same application.

The anode backbone according to the invention is also mechanically less brittle and more fracture-tough than conductive ceramic alternatives, because the metal makes the cermet more ductile. It is also less expensive than some alternative oxides, and compared to Ni anodes or even some oxides it interacts with the adjacent steel to a significantly lesser extent.

The invention is illustrated further by the following examples.

### Example 1

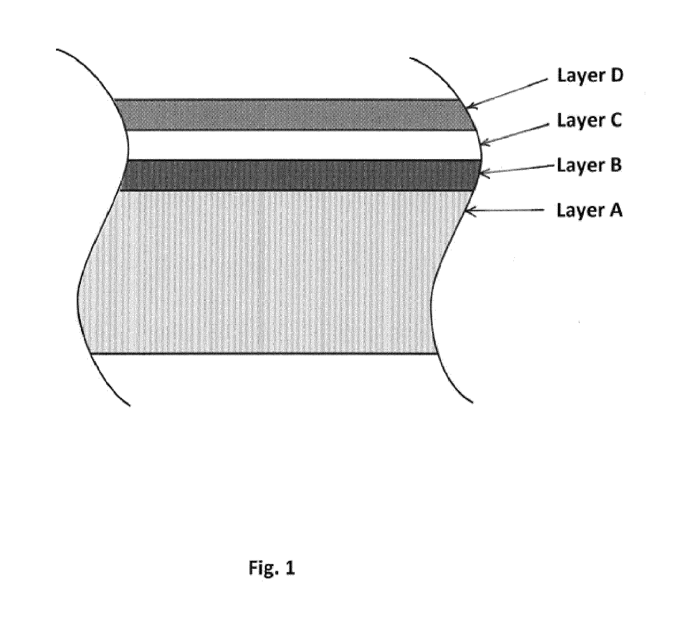

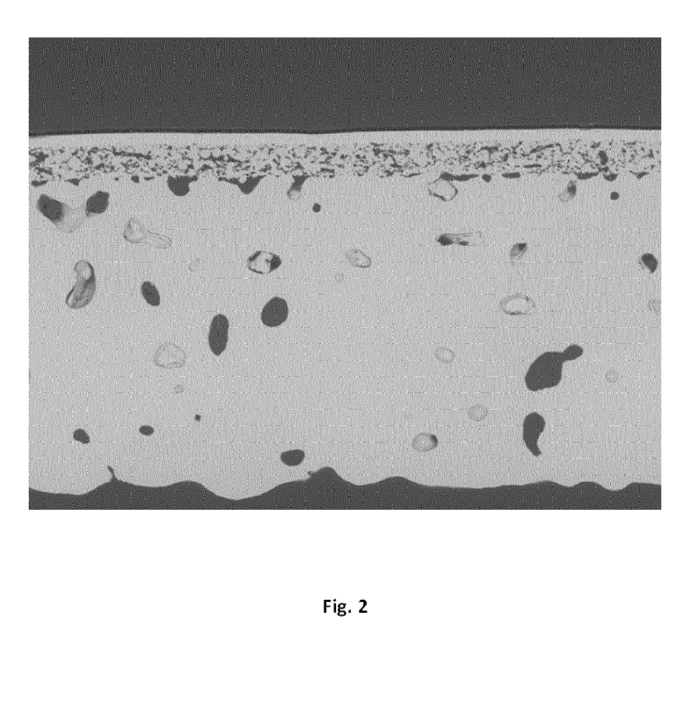

A metal-supported solid oxide cell was fabricated according to the following procedure:
1) A porous metallic support layer ("Layer A") of 22% Cr-based stainless steel alloy is fabricated by tape-casting.
2) A backbone layer ("Layer B") consisting predominately of CoO (cobalt(II)oxide and ScYSZ (scandia-, yttria-co-stabilized zirconia), binders, solvents and other minor additives, such as sintering inhibitors, is fabricated by tape-casting. The thickness of this layer is controlled to approximately 15 µm.
3) An electrolyte layer ("Layer C") based on ScYSZ (scandia, yttria-co-stabilized zirconia) is fabricated by tape-casting. Alternatively, Layer C can be prepared by spraying.
4) The layers are combined so that Layer B sits between Layer A and Layer C (Fig. 1). The resulting solid oxide cell is sintered in a mixture of H₂/Ar at a temperature above 1100°C. Following this procedure, the electrolyte layer is substantially gas-tight (Fig. 2).
5) ((optional) A diffusion barrier layer is applied on top of layer C.
6) ((optional) An air electrode is applied by screen printing of LSCF (strontium-doped lanthanum cobaltite ferrite / CGO (gadolinia doped ceria) paste (50/50 by weight), fired in situ during cell testing.
7) ((optional) Layers A and B are infiltrated with Ni and doped ceria, as described in US 2009/0061272.

### Example 2

A metal-supported solid oxide cell is fabricated according to the procedure of Example 1. The cell is operating as a solid oxide fuel cell in the temperature range 600-800°C with a supply of air being fed to the air electrode (cathode) and a combustible fuel being fed to the fuel electrode (anode).

### Example 3

A metal-supported solid oxide cell is fabricated according to the procedure of Example 1. The cell is operating as a solid oxide electrolysis cell in the temperature range 600-800°C, with gaseous oxygen being formed on the air electrode (anode) and either steam conversion into H₂, CO₂ conversion into CO, or both simultaneously occurring on the fuel electrode (cathode).

## Claims

1. A solid oxide cell consisting of at least one layer containing steel (metal alloys consisting predominantly of Fe) [layer A "support"], in which the backbone of one or more layers [layer B ("anode" or "cathode")], that is located between layer A and a substantially dense ion-conducting layer [layer C "electrolyte"], is a cermet comprising a ceramic material with a metal alloy, in which the main metal component is neither nickel nor steel.

2. Cell according to claim 1, wherein layer B is a series of layers (B1, B2,...) in which the layers are graded by at least one of their properties such as pore size, particle size, porosity, and material composition.

3. Cell according to claim 1, wherein the metal of layer B is cobalt.

4. Cell according to claim 1, wherein the metal of layer B comprises two or more metals selected from Co, Cu, Cr, Fe, Mo and Zr.

5. Cell according to claim 4, wherein the metal of layer B comprises weight percents of metals in the ranges of: 50-99% Co, 0-20% Cr, 0-15% Mo, 0-49% Fe, and less than 1% each of Ni, Mn, Si, and C.

6. Cell according to claim 4, wherein the metal of layer B comprises weight percents of metals in the ranges of: 50-70% Co, 15-40% Cr, 1-15% Mo, and less than 1% each of Ni, Mn, Fe, Si, and C.

7. Cell according to claim 1, wherein the metal of layer B consists predominantly of Cu containing at least 10% Co and optionally minor amounts of Cr, Mo, Zr or Be, or a combination thereof.

8. Cell according to claim 4, wherein the metal of layer B consists predominantly of Co containing minor amounts of Cr or Mo.

9. Cell according to claim 4, wherein the metal of layer B consists predominantly of Cr.

10. Cell according to any of the preceding claims, wherein the ceramic material is a zirconia with high content in the cubic phase as stabilized by Sc, Y or Al, or a combination thereof.

11. Cell according to any of the preceding claims, wherein the ceramic material is an oxygen conductor (such as Y-stabilized zirconia, Sc-stabilized zirconia, doped lanthanum gallates (such as LSGM) or doped ceria) or a proton-conductor (doped barium cerates (BCY) or barium zirconates (BCZ)), or a mixture of any of these.

12. Cell according to any of the preceding claims, wherein the metal of layer B contains minor amounts of sintering inhibitor oxides, which may be located within the metal, partially within the metal, or at the metal surface as dense or non-dense coatings.

13. Cell according to any of the preceding claims, wherein the metal of layer B has a porosity between 20% and 80%.

14. Cell according to any of the preceding claims, wherein the metal of layer B has a particle size between 0.5 µm and 20 µm.

15. Cell according to any of the preceding claims, wherein layer B has a thickness between 5 µm and 100 µm.

16. Cell according to any of the preceding claims, wherein the mass ratio of ceramic material to metallic material in Layer B is below 80% and as low as approximately 0%.

17. Cell according to any of the preceding claims, wherein the layer B backbone materials are coated with electrochemically active materials for the fuel cell operation.

18. Cell according to claim 17, wherein the active materials comprise Ni and doped ceria.

19. Cell according to any of the preceding claims, wherein the layer B backbone or active materials thereupon are coated with corrosion-inhibiting materials.

20. Cell according to any of the preceding claims, wherein the backbone or active materials thereupon are coated with chemicals promoting chemical tolerance to operation in sulfur-containing fuels.

21. Use of the cell according to any of the claims 1-20 as a part of solid oxide fuel cells.

22. Use of the cell according to any of the claims 1-20 as a part of solid oxide electrolysis cells.

23. Use of the cell according to any of the claims 1-20 as a part of electrochemical flue gas cleaning devices, oxygen separation membranes, and hydrogen separation membranes.

24. A stack of cells according to any of the preceding claims, wherein the cells are electrically connected in series configuration.
